Europäisches Patentamt

European Patent Office

Office européen des brevets

(19)

(11) Publication number: **0 090 454**
**B1**

(12) **EUROPEAN PATENT SPECIFICATION**

(45) Date of publication of patent specification: 02.10.85

(51) Int. Cl.⁴: **C 07 F 9/10**

(21) Application number: 83200390.9

(22) Date of filing: 22.03.83

(54) **Process for the manufacture of a preparation having a high content of phosphatidylcholine from a phosphatide mixture.**

(30) Priority: 26.03.82 GB 8209039

(43) Date of publication of application:
05.10.83 Bulletin 83/40

(45) Publication of the grant of the patent:
02.10.85 Bulletin 85/40

(84) Designated Contracting States:
AT BE CH DE FR GB IT LI NL SE

(56) References cited:
EP-A-0 043 018
DE-C-1 070 484
GB-A- 529 114

Patent Abstracts of Japan vol. 4, no. 124, 2 septembre 1980 page 28C23
Patent Abstracts of Japan vol. 4, no. 93, 5 july 1980 page 5C17
Patent Abstracts of Japan vol. 3, no. 19, 17 february 1979 page 1C37

(73) Proprietor: UNILEVER NV
Burgemeester s'Jacobplein 1 P.O. Box 760
NL-3000 DK Rotterdam (NL)
(84) BE CH DE FR IT LI NL SE AT

(73) Proprietor: UNILEVER PLC
Unilever House Blackfriars P.O. Box 68
London EC4P 4BQ (GB)
(84) GB

(72) Inventor: Todt, Klaus Hinrich
Achter de Höf 21
D-2000 Hamburg 56 (DE)
Inventor: Flohr, Georg
Espellohweg 8
D-2000 Hamburg 52 (DE)
Inventor: Strauss, Hans-Jörg
Langkamp 13
D-2000 Hamburg 52 (DE)

(74) Representative: Dries, Antonius Johannes Maria et al
Unilever N.V. Patent Division P.O. Box 137
NL-3130 AC Vlaardingen (NL)

Courier Press, Leamington Spa, England.

## Description

The invention relates to a process for the manufacture of a preparation having a high content of phosphatidylcholine from a phosphatide mixture by admixing an alcoholic solution of the phosphatide mixture with an aqueous or alcoholic solution of a sufficiently soluble salt of a bi- or trivalent metal.

Phosphatides, especially those occurring in crude vegetable fats and oils from which they are isolated by methods known in the art, are esters of phosphatidic acids (diacylglycerylphosphoric acids) and N-containing alcohols such as 2-aminoethanol (colamine), 2-amino-3-hydroxy-propanoic acid (serine) and trimethyl(2-hydroxyethyl)ammonium hydroxide (choline), and N-free hydroxy compounds, such as inositol.

Of these phosphatides, the ester of choline, viz. phosphatidylcholine is rated high as a pharmaceutical compound, as an emulsifier or for dietetic purposes.

Therefore, in both patent and scientific/technological literature processes are described to separate the phosphatides present in phosphatide mixtures and to isolate the fraction wanted. There are processes in which separation is accomplished by using the different solubilities in organic solvents, by adsorption, by chromatographic separation, and by ion-exchange. For example, in European Patent Application No. 0 043 018 it is described to prepare products rich in phosphatidylcholine by de-oiling an alcoholic oil-containing phosphatides solution by adding water to the solution, separating off the oil sediment and recovering a product rich in phosphatidylcholine from the aqueous alcohol-phase, e.g. by adsorption of phosphatidylcholine to aluminiumoxide and elution with alcohol. All these processes have their advantages and their drawbacks.

There are also processes known in which phosphatides are treated with metal salts and isolated as metal salt complexes. As early as 1926 it was described in the Swiss patent specification No. 127 256 to obtain a lecithin preparation by precipitation from an alcoholic solution with calcium chloride. From the complex obtained the lecithin can be recovered, but from the description it is not clear whether lecithin proper, i.e. phosphatidylcholine, or a phosphatide mixture without much impurity is meant. G. Elenbogen described in the United States patent No. 3 081 320, assigned to Baxter Laboratories Inc., to precipitate an insoluble calcium salt of phosphatidic acids present by adding calciumhydroxide or acetate to a solution of an alcohol-soluble fraction of phosphatide in ethanol; this leaves an alcoholic solution of the phosphatides which are apparently not separated in this way. Other processes are known from German patent No. 1 070 484 to Société Française de Recherches Biochimiques H. Besson & Cie., claiming priority from 27-04-1956 and 29-03-1957. In this specification it is described that a solution of a crude phosphatide mixture, preferably defatted with acetone, in 95—100% ethanol is treated with a solution of magnesium sulphate in methanol or water. When methanol is used, a complex is precipitated. When water is used, a thick paste is obtained which is solidified further by adding acetone. In this process a complex of phosphatidylcholine is precipitated with magnesium sulphate from a lecithin preparation substantially free of phosphatidylcolamine, obtained by treating one part of crude phosphatide mixture with 5—10 parts of magnesium oxide. The precipitate contains up to 28% of magnesium sulphate, which is not removed. The phosphatidylcholine is precipitated by at least 0,5 part by weight of magnesium sulphate heptahydrate per part of phosphatidylcholine.

In Japanese patent application No. 55-54861 a process for the preparation of purified lecithin is described wherein crude oil-containing lecithin is extracted with propylene glycol and coagulated with calcium or magnesiumchloride. Japanese patent application No. 53-141300 describes a process for the purification of lecithin by de-oiling crude lecithin, extracting it with alcohol, adding zinc chloride to precipitate the lecithin and recovering the lecithin from the precipitate. These Japanese applications do not refer to the fractionation of phosphatides.

It has now been found that separation of the phosphatides present in a phosphatide mixture can be accomplished by treating an alcoholic solution of such a mixture with sufficiently soluble salts of di- and trivalent metals dissolved in an alcohol or in water, in an amount which precipitates phosphatidylcolamine and phosphatidylserine (in addition to phosphatidic acid), but substantially leaves phosphatidylcholine in solution.

Accordingly, the present invention provides a process for the manufacture of a preparation having a high content of phosphatidylcholine from a phosphatide mixture by admixing a solution of the phosphatide mixture in an alcohol containing 1—3 carbon atoms with an aqueous or alcoholic solution of a sufficiently soluble salt of a bi- or trivalent metal, and separating the precipitate formed and the remaining solution, characterized in that the di- or trivalent metal salts containing solution is admixed in an amount which leaves most of the phosphatidylcholine in solution and precipitates most of the other phosphatide compounds present in the phosphatide mixture, said solution containing the metal salt in an amount of 1—20% calculated on the weight of the dry phosphatide mixture, and the solvent of the solution remaining after separation of the precipitate is evaporated.

The following Table shows the effect of this invention (extracted from figures given in the Examples in more detail):

2

| Example | % MgSO$_4$ of amount of starting material | Yield (%) of phosphatides | |
|---------|---------------------------------|-------------------------|-------------------------|
| | | Phosphatidyl-choline | Phosphatidyl-colamine |
| VI | 1.0 | 100 | 56 |
| IV | 2.4 | 80 | 13 |
| I | 3.7 | 79 | 6 |
| III | 3.9 | 88 | 12 |

The phosphatide mixture used as starting material can be the crude mixture as obtained by desliming oils and fats, possibly defatted. One can also start from mixtures which were purified further by removal of sugars, fats and other non-phosphatide contaminants. One can also start from phosphatide mixtures already partly enriched in phosphatidylcholine or fractions remaining from such an enrichment. Although the main purpose may be to obtain preparations with a high proportion of phosphatidylcholine, the fractions which contain high proportions of other phosphatides, such as phosphatidylcolamine need not be discarded but may be used for other useful purposes.

For the present process the phosphatide mixture is dissolved in an aliphatic alcohol with 1—3 carbon atoms; methanol is preferably used, but ethanol containing up to 25% water, and 2-propanol can also be employed. The concentration is from about 5 wt.% to about 35 wt.%, preferably between 10 and 25 wt.%.

As appears from screening experiments, a lot of water- or alcohol-soluble salts of di- or trivalent cations such as magnesium, zinc, calcium, cadmium and aluminium cations can precipitate phosphatidylcolamine and phosphatidic acid from alcoholic solutions and leave phosphatidylcholine in solution. Obviously, for food and pharmaceutical uses only non-toxic salts are to be used. The salts are, before being admixed with the phosphatide solution, dissolved in a suitable solvent, such as an alcohol or water, in which they must be sufficiently soluble. Both hydrates of the salts and anhydrous salts can be used. Salts that can be used include magnesium sulphate, magnesium chloride, magnesium bromide, magnesium nitrate, and magnesium acetate. Magnesium sulphate is preferred, for both selectivity and toxicological reasons.

The concentration of the salt solution is preferably as high as possible for easy treatment, but lower concentrations can be used without disadvantage. As solvents can be used aliphatic alcohols with 1—3 carbon atoms, methanol being preferred, and water.

The amount of salt, calculated as the anhydrous salt, relative to the weight of the phosphatide starting material is 1—20%, preferably 3—8%, and depends on the content of phosphatides to be precipitated. With higher amounts phosphatidylcholine is also precipitated, with lower amounts phosphatidylcolamine etc. is left in solution.

The temperature at which the precipitation can be performed is 0—75°C, but only slight differences are observed at different temperatures. There is therefore no need to operate at other temperatures than ambient temperature or slightly higher.

After the phosphatide solution and the salt solution has been mixed carefully and the precipitate has been formed, the mixture is stirred well to avoid inclusion of solute in the precipitate as well as possible; the precipitate is then removed from the remaining solution by decanting, by filtration, by centrifuging or by other suitable means. The remaining solution is evaporated, possibly under reduced pressure, leaving a preparation enriched in phosphatidylcholine.

For further enrichment the process can be repeated.

The preparation can further be purified by removing sugars and fats, which can also be done before the precipitation process or repetition of the process.

By the process invented, a preparation containing over 70% or even over 80% phosphatidylcholine can be obtained.

The invention is further illustrated by the following examples, which do not however limit the scope of the invention.

Example I

To a solution of 100 g defatted ethanol-soluble part of soyaphosphatide in one litre methanol, 15 g of an aqueous solution containing 3.7 g magnesium sulphate (concentration 244 g/kg) was added while stirring (amount 0.037 g MgSO$_4$ per g phosphatide). The precipitate was filtered off using 50 g silicagel as filter aid. The filtered solution was evaporated leaving 65 g product.

The product was analyzed

3

— for the various phosphatides by thin-layer chromatography according to Fette, Seifen, Anstrichmittel, *63*, 1119—1123 (1961);

— for the water-soluble part as follows: 5 g product was dissolved in 200 ml of a mixture of 2 parts of chloroform and 1 part of methanol; 40 ml water were then added and the whole shaken for 2 min. The mixture was centrifuged, the upper phase separated and evaporated in vacuum. The residue, being the water-soluble part, was weighed after drying at 60°C;

— for nitrogen (Kjeldahl); for magnesium by atomic absorption spectrophotometry (see e.g. W. T. Elwell and J. A. F. Gidley, Atomic-Absorption Spectrophotometry, Oxford et al. 1966, pp. 100—101).

| | Starting material | | Product | | |
|---|---|---|---|---|---|
| Analysis data: | g | % | g | % | Yield % |
| total | 100 | | 65 | | 65 |
| phosphatidylcholine | 60 | 60 | 47.5 | 73 | 79 |
| phosphatidylcolamine | 11 | 11 | 0.7 | 1 | 6 |
| lyso-phosphatidylcholine | 3 | 3 | 0 | 0 | 0 |
| water-soluble part | | | 11.1 | 17 | |
| nitrogen | | | | 1.42 | |
| magnesium | | | | 0.44 | |

Instead of dissolving the defatted ethanol-soluble part of soyaphosphatide in methanol, about the same results are obtained by dissolving the starting material in 1 litre 90% ethanol or in 1 litre 2-propanol.

Example II

To a solution of 100 g of the ethanol-soluble part of soya-phosphatide in 500 g methanol, 16 g of an aqueous solution containing 3.9 g magnesium sulphate (concentration 244 g/kg) was added while stirring (amount 0.039 g $MgSO_4$ per g phosphatide). After removal of the precipitate and evaporation of the remaining solution as in Example I, the residue was first treated with 175 ml of a 1:1 acetone/water mixture and then 4 times with 175 ml acetone. By this aftertreatment sugar and fat are substantially removed.

The product was analyzed as indicated in Example I, and for phosphorus according to method F-I 5a (68), published by Deutsche Gesellschaft für Fettwissenschaft, Deutsche Einheitsmethoden (Stuttgart 1950—1975), and for fat/oil according to H. Pardun, Fette, Seifen, Anstrichmittel *66*, 467 (1964).

| Analysis data: | Starting material | | | Product | |
|---|---|---|---|---|---|
| | g | % | g | % | Yield (%) |
| total | 100 | | 35 | | 35 |
| phosphatidylcholine | 32 | 32 | 27.7 | 79 | 86 |
| phosphatidylcolamine | 6 | 6 | 0.4 | 1 | 6.7 |
| lyso-phosphatidylcholine | } 11 | } 11 | } 2.7 | 4.8 | } 24.8 |
| other phosphatides | | | | 3 | |
| nitrogen | | | | 1.54 | |
| phosphorus | | 2 | | 3.44 | |
| magnesium | | | | 0.7 | |
| fat/oil | 40 | 40 | 0.2 | 0.6 | 0.5 |
| water-soluble part | 8 | 8 | | 6.7 | 29.3 |

Example III

100 g of an alcohol soluble fraction of desugarized soya-phosphatide was dissolved in 400 ml methanol. To this solution 16 g of an aqueous solution containing 3.9 g $MgSO_4$ was added dropwise, while stirring. After the addition was completed, stirring was continued for another 60 min at room temperature; the precipitate was then removed by centrifuging, and washed with 50 ml methanol. The combined methanolic solution was evaporated. The dry residue (70 g) was deoiled by treatment with methyl acetate, leaving 57 g product.

The product was analyzed as indicated in the previous Examples.

| Analysis data: | Starting material | | | Product | |
|---|---|---|---|---|---|
| | g | % | g | % | Yield (%) |
| total | 100 | | 57 | | 57 |
| phosphatidylcholine | 52 | 52 | 46 | 80 | 88 |
| phosphatidylcolamine | 10 | 10 | 1.1 | 2.0 | 12 |
| lyso-phosphatidylcholine | <1 | <1 | | 1 | |
| phosphorus | | 2.9 | | 3.6 | |
| oil/fat | 15 | 15 | | | |

Example IV

22.3 kg of an alcohol soluble fraction of desugarized soyaphosphatide was dissolved in 112 kg methanol. To this solution 2.16 kg of an aqueous solution containing 0.53 kg $MgSO_4$ was added at room temperature, while stirring. After 0.5 h stirring the precipitate was allowed to settle overnight, whereupon the supernatant was removed by decantation. After evaporation of the solution obtained 14.8 kg (66%) of a solid product was obtained. The product was analyzed as indicated in the first two Examples.

| Analysis data: | Starting material | | Product | | |
|---|---|---|---|---|---|
| | g | % | g | % | Yield (%) |
| total | 22300 | | 14800 | | 66 |
| phosphatidylcholine | 11150 | 50 | 8880 | 60 | 80 |
| phosphatidylcolamine | 2230 | 10 | 296 | 2 | 13 |
| lyso-phosphatidylcholine | 669 | 3 | 592 | 4 | |
| phosphorus | | 2.7 | | 2.9 | |
| magnesium | | | | 0.4 | |
| oil | 4906 | 22 | 2220 | 15 | 45 |

Example V

100 g soyaphosphatide were extracted with 500 ml methanol at 50°C stirring for 1 h. The mixture was allowed to cool to ambient temperature and the clear supernatant was decanted. To the clear solution obtained, 6.2 g of an aqueous solution containing 1.5 g MgSO$_4$ (concentration 244 g/kg) were added while stirring. The precipitate (12.3 g) was removed and the solution obtained was evaporated. The residue was washed with a mixture of 50 ml hexane (petrol-ether), 50 ml methanol and 50 ml water. The two layers were separated by centrifuging and the aqueous methanol layer washed with 25 ml hexane. The combined hexane layers were evaporated and the residue was defatted by dissolving 4 times in 30—40 ml methyl acetate at 40°C and precipitating by chilling at 0°C. Yield: 12 g product.

| Analysis data: | g | % |
|---|---|---|
| total | 12 | |
| phosphatidylcholine | 7.9 | 66 |
| phosphatidylcolamine | 0.3 | 2.7 |
| lyso-phosphatidylcholine | 0.2 | 1.6 |
| nitrogen | | 1.55 |
| phosphorus | | 3.27 |

Example VI

To a solution of 100 g defatted ethanol-soluble part of soyaphosphatide in 400 ml methanol, 4 g of an aqueous solution containing 1 g magnesium sulfate (concentration 244 g/kg) was added while stirring. The precipitate was allowed to settle overnight, and the clear supernatant was isolated by decanting. After evaporation 77 g product was obtained.

| Analysis data: | Starting material | | Product | | |
|---|---|---|---|---|---|
| | g | % | g | % | Yield (%) |
| total | 100 | | 77 | | 77 |
| phosphatidylcholine | 32.5 | 32.5 | 32.4 | 42.1 | 100 |
| phosphatidylcolamine | 6.2 | 6.2 | 3.4 | 4.5 | 56 |

Example VII

14.8 desugarized ethanol-soluble part of soyaphosphatide were dissolved in 98 ml methanol. To this solution 10 ml of a freshly prepared solution containing 1.46 g magnesium sulphate heptahydrate in methanol were added dropwise while stirring. After 15 min the precipitate was allowed to settle, and subsequently the supernatant was separated therefrom by decanting. The supernatant left on evaporation 11.0 g of a solid product.

| Analysis data: | Starting material | | Product | | |
|---|---|---|---|---|---|
| | g | % | g | % | Yield (%) |
| total | 14.8 | | 11.0 | | 74 |
| phosphatidylcholine | 7.4 | 50 | 5.6 | 51 | 76 |
| phosphatidylcolamine | 1.5 | 10 | 0.1 | 1 | 7 |

### Claims

1. Process for the manufacture of a preparation having a high content of phosphatidylcholine from a phosphatide mixture by admixing a solution of the phosphatide mixture in an alcohol containing 1—3 carbon atoms with an aqueous or alcoholic solution of a sufficiently soluble salt of a bi- or trivalent metal, and separating the precipitate formed and the remaining solution, characterized in that the di- or trivalent metal salts containing solution is admixed in an amount which leaves most of the phosphatidylcholine in solution and precipitates most of the other phosphatide compounds present in the phosphatide mixture, said solution containing the metal salt in an amount of 1—20% calculated on the weight of the dry phosphatide mixture, and the solvent of the solution remaining after separation of the precipitate is evaporated.

2. Process according to claim 1, characterized in that a salt of magnesium is used.

3. Process according to claim 2, characterized in that magnesium sulphate is used.

4. Process according to claims 1—3, characterized in that 3—8% by weight of the salt relative to the weight of phosphatide is used.

5. Process according to claims 1—4, characterized in that an aqueous solution of the metal salt is used.

6. Process according to claims 1—5, characterized in that the phosphatide mixture is dissolved in methanol or ethanol or a mixture thereof.

### Patentansprüche

1. Verfahren zur Herstellung eines Präparates mit einem hohen Phosphatidylcholingehalt aus einer Phosphatidmischung durch Vermischen einer Lösung der Phosphatidmischung in einem 1 bis 3 Kohlenstoffatome enthaltenden Alkohol mit einer wäßrigen oder alkoholischen Lösung eines ausreichend löslichen Salzes eines zwei- oder dreiwertigen Metalls, und Abtrennen der gebildeten Ausfällung und der zurückbleibenden Lösung, dadurch gekennzeichnet, daß die die zwei- oder dreiwertigen Metallsalze enthaltende Lösung vermischt wird in einer Menge, die den größten Teil des Phosphatidylcholins in Lösung läßt und die den größten Teil der anderen in der Phosphatidmischung enthaltenen Phosphatidverbindungen ausfällt, die das Metallsalz enthaltende Lösung in einer Menge von 1 bis 20%, bezogen auf das Gewicht der trockenen Phosphatidmischung, enthält, und das Lösungsmittel von der zurückbleibenden Lösung nach der Abtrennung der Ausfällung im Vakuum eingeengt wird.

2. Verfahren nach Anspruch 1, dadurch gekennzeichnet, daß ein Magnesiumsalz verwendet wird.

3. Verfahren nach Anspruch 2, dadurch gekennzeichnet, daß Magnesiumsulfat verwendet wird.

4. Verfahren nach den Ansprüchen 1 bis 3, dadurch gekennzeichnet, daß 3 bis 8 Gew.% des Salzes, bezogen auf das Gewicht des Phosphatids, verwendet werden.

5. Verfahren nach den Ansprüchen 1 bis 4, dadurch gekennzeichnet, daß eine wäßrige Lösung des Metallsalzes verwendet wird.

6. Verfahren nach den Ansprüchen 1 bis 5, dadurch gekennzeichnet, daß die Phosphatidmischung gelöst wird in Methanol oder Ethanol oder einer Mischung davon.

### Revendications

1. Procédé pour la fabrication d'une préparation possédant une forte teneur en phosphatidylcholine à partir d'un mélange de phosphatides en mélangeant une solution du mélange de phosphatides dans un alcool contenant 1—3 atomes de carbone avec une solution aqueuse ou alcoolique d'un sel suffisamment soluble d'un métal di ou trivalent et en séparant le précipité formé et la solution restante, caractérisé en ce que la solution contenant les sels des métaux di ou trivalents est mélangée en quantité qui laisse la plupart

**0 090 454**

de la phosphatidylcholine en solution et précipite la plupart des autres composés phosphatides présents dans le mélange de phosphatides, la dite solution contenant le sel métallique en quantité de 1—20%, calculée par rapport au poids du mélange de phosphatides sec, et en ce que le solvant de la solution restant après la séparation du précipité est évaporé.

2. Procédé selon la revendication 1, caractérisé en ce que l'on utilise un sel de magnésium.

3. Procédé selon la revendication 2, caractérisé en ce que l'on utilise le sulfate de magnésium.

4. Procédé selon les revendications 1—3, caractérisé en ce que l'on utilise 3—8% en poids du sel par rapport au poids de phosphatide.

5. Procédé selon les revendications 1—4, caractérisé en ce que l'on utilise une solution aqueuse du sel métallique.

6. Procédé selon les revendications 1—5, caractérisé en ce que le mélange de phosphatides est dissous dans le méthanol ou l'éthanol ou leur mélange.